# EUROPEAN PATENT SPECIFICATION

(11) **EP 1 550 116 B1**
(45) Date of publication and mention of the grant of the patent: **07.06.2006**
(21) Application number: 03798283.2
(22) Date of filing: 10.09.2003
(51) Int. Cl.: G11B 7/09, G02B 7/02

(54) **OBJECTIVE LENS ACTUATOR WITH IMPROVED RESONANCE FREQUENCY**
OBJEKTIVLINSENBETÄTIGUNGSGLIED MIT VERBESSERTER RESONANZFREQUENZ
DISPOSITIF D'ACTIONNEMENT DE LENTILLE DE FOCALISATION A FREQUENCE DE RESONANCE AMELIOREE

(30) Priority: 25.09.2002 EP 02292354
(43) Date of publication of application: 06.07.2005
(73) Proprietor: Koninklijke Philips Electronics N.V., 5621 BA Eindhoven (NL)
(72) Inventor: VAN ROOIJ, Johannes, Antonius, F-75008 Paris (FR)
(74) Representative: Chaffraix, Jean
(86) International application number: PCT/IB2003/004015
(87) International publication number: WO 2004/029945

(56) References cited:
- US-A- 5 986 983
- US-B1- 6 344 936
- PATENT ABSTRACTS OF JAPAN vol. 2000, no. 02, 29 February 2000 (2000-02-29) -& JP 11 320007 A (TOTOKU ELECTRIC CO LTD), 24 November 1999 (1999-11-24) -& DATABASE WPI Section PQ, Week 200006 Derwent Publications Ltd., London, GB; Class P52, AN 2000-067213 XP002266099 & JP 11 320007 A (TOKYO TOKUSHU DENSEN KK) , 24 November 1999 (1999-11-24)
- PATENT ABSTRACTS OF JAPAN vol. 1999, no. 02, 26 February 1999 (1999-02-26) & JP 10 306358 A (TOTOKU ELECTRIC CO LTD), 17 November 1998 (1998-11-17) & DATABASE WPI Derwent Publications Ltd., London, GB; AN 1999-054512 & JP 10 306358 A (TOTOKU ELECTRIC CO LTD)

## Description

### FIELD OF THE INVENTION

The present invention relates to an objective lens actuator comprising a lens holder, a first pair of first coil carriers fixed on opposite sides of the lens holder, and a second pair of second coil carriers, adjacent to said first pair and fixed on opposite sides of the lens holder.

This invention is particularly relevant for optical recording and reproducing system requiring high bandwidth.

### BACKGROUND OF THE INVENTION

Conventional two-dimensional (2-D) optical system lens actuators, which are able to perform focus and radial disc tracking, have a head resonance frequency around 15 kHz, resulting in a maximum bandwidth of 3 to 6 kHz.

Based on the structure of 2-D actuators, new three-dimensional (3-D) lens actuators, which are able to perform tilt correction in addition to the two above-cited features, have a head resonance of 11 kHz, resulting in a low bandwidth of the optical system in which they are included.

As an example of low bandwidth system, the patent US-A-5986983 discloses an objective lens actuator comprising a lens holder, a first pair of coil carriers, fixed on opposite sides of the lens holder, a first coil being used for moving an objective lens in a first direction, and a second pair of second coil carriers adjacent to said first pair and fixed on opposite sides of the lens holder, a second coil being used for moving the objective in a second direction, and tension wires wherein a tension wire is fixed between the coil carriers of a pair.

### SUMMARY OF THE INVENTION

It is an object of the invention to propose an objective lens actuator with a higher bandwidth.

To this end, the objective lens actuator in accordance with the invention is characterized in that the tension wires are placed inside the lens holder and both of the wire ends are fixed to a coil carrier being on opposite sides of the lens holder such that they are adapted to rigidify the objective lens actuator.

As a result, the actuator head resonance is increased as well as the bandwidth of the optical system comprising said actuator.

The objective lens actuator in accordance with the invention can be included in a recording and/or reproducing system, such as a DVD recorder or a DVD player for example, for recording on and/or reproducing from a record carrier.

These and other aspects of the invention will be apparent from and will be elucidated with reference to the embodiments described hereinafter.

### BRIEF DESCRIPTION OF THE DRAWINGS

The present invention will now be described in more detail, by way of example, with reference to the accompanying drawings, wherein:
- Fig. 1 is a 3-D representation of a conventional implementation of a 3-D actuator,
- Fig. 2 is a 3-D representation of a 3-D actuator in accordance with the invention, and
- Fig. 3 shows the frequency response of said 3-D actuator.

### DETAILED DESCRIPTION OF THE INVENTION

The present invention relates to an objective lens actuator. This objective lens actuator can be a two-dimensional (2-D) actuator, comprising radial coils for moving the objective lens in a radial direction and focus coils for moving the objective lens in a focal direction.

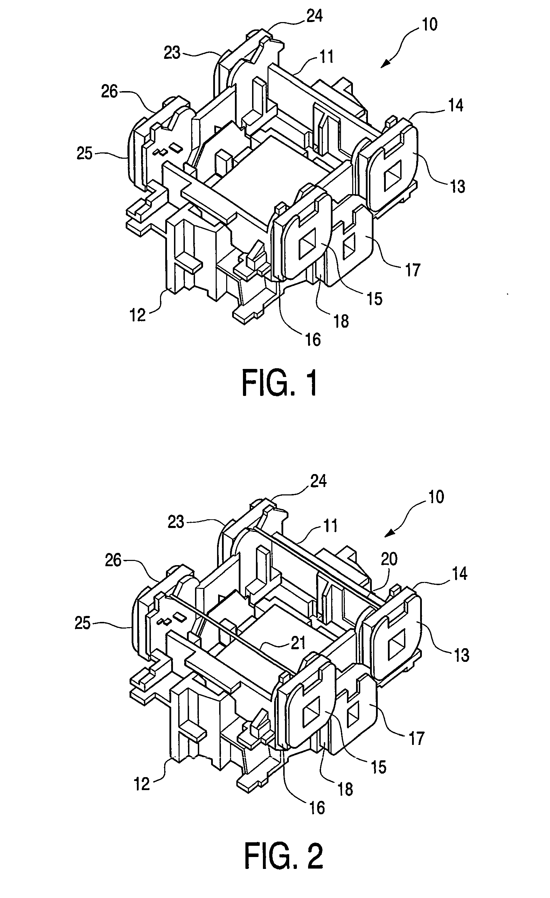

In the preferred embodiment, the objective lens actuator is a three-dimensional (3-D) actuator. Said 3-D actuator is depicted in Fig. 1 and comprises a lens holder (10), for example made of plastic material. Said lens holder is constituted of two parts (11,12) attached to each other, the section of each part being substantially rectangular. The lens holder (10) is able to hold an objective lens, which is positioned below the lower part (12), said lens not being represented in Fig. 1.

The upper part (11) of the lens holder comprises a first pair of coil carriers (13,23) fixed on opposite sides of said upper part. A coil carrier (13,23) of the first pair is able to carry a first coil (14,24), which is rolled around said carrier. The first coil (14,24) is used for moving the objective lens in a first direction. In the preferred embodiment, said first coil (14,24) is a focus coil used for moving the objective lens in a focal direction.

The upper part (11) of the lens holder also comprises a second pair of coil carriers (15,25) fixed on opposite sides of said upper part. A coil carrier of the first pair (13 or 23) is adjacent to a coil carrier of the second pair (15 or 25), said coil carriers being positioned on the same side of the rectangular section. A coil carrier (15,25) of the second pair is able to carry a second coil (16,26), which is rolled around said carrier. The second coil (16,26) is used for moving the objective lens in a second direction. In the preferred embodiment, said second coil (16,26) is a tilt coil dedicated to a tilt correction, that is to say a correction of a tilt around an uncontrolled actuator translation.

The lower part (12) of the lens holder also comprises a third pair of coil carriers (only one coil carrier (17) of said pair being represented in Fig. 1) fixed on opposite sides of said lower part. A coil carrier of the third pair (17) is positioned on the same side of the rectangular section as a coil carrier of the first (13) and second (15) pairs. A coil carrier (17) of the third pair is able to carry a third coil (18), which is rolled around said carrier. The third coil (18) is used for moving the objective lens in a third direction. In the preferred embodiment, said third coil (18) is a radial coil used for moving the objective lens in a radial direction.

With such a structure, the 3-D actuator has a resonance frequency of about 11 kHz, resulting in a poor bandwidth of the optical system comprising said actuator.

In order to cope with this problem, Fig. 2 shows a 3-D actuator in accordance with the invention. In addition to the above-described characteristics, the 3-D actuator comprises tension wires (20,21), a first tension wire (20) being fixed between the coil carriers (13,23) of a first pair and second tension wire (21) being fixed between the coil carriers (15,25) of a second pair.

In the preferred embodiment, the tension wires are substantially perpendicular to the coil carriers and are fixed on top of a median axis of the coil carriers. By virtue thereof a better performance in terms of an increase of the 3-D actuator resonance frequency is achieved.

In the preferred embodiment, the tension wires are made of beryllium-copper and are about 140 mm thick and 7 mm long. Thus, the mass of the tension wires is about 2 mg, that is to say about 10% of the mass of the lens holder and only about 1% of the total mass of the actuator. By using such tension wires, it is possible to make a very lightweight lens holder resulting in a higher power efficiency of the optical system comprising the 3-D actuator, and thus in low power needs and less heating of the lens.

Note that in the case of a 2-D actuator, the lens holder comprises only two pairs of coil carriers, said two pairs being fixed on the upper part of the lens holder and being adjacent to each other. The first coils mounted on the first pair of coil carriers are focus coils whereas the second coils mounted on the second pair of coil carriers are radial coils.

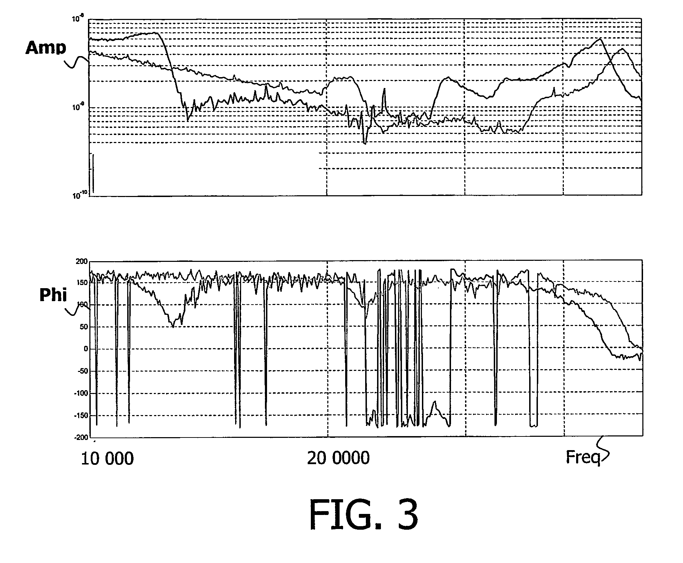

Fig. 3 shows the frequency response of the 3-D actuator in accordance with the invention. It represents the measured focus frequency response curve, that is to say the ratio of the velocity of the objective lens in the focus direction to the focussing force in terms of amplitude (Amp) and phase (Phi) as a function of the frequency (Freq). The grey line represents the improved 3-D actuator response whereas the black line represents the conventional 3-D actuator response. It can be seen that the resonance frequency has increased from 11 kHz to 21 kHz. As a result, the bandwidth of the optical system comprising said actuator is increased up to 7 kHz.

Any reference sign in the following claims should not be construed as limiting the claim. It will be obvious that the use of the verb "to comprise" and its conjugations does not exclude the presence of any other steps or elements besides those defined in any claim. The word "a" or "an" preceding an element or step does not exclude the presence of a plurality of such elements or steps.

## Claims

1. An objective lens actuator comprising a lens holder (10), a first pair of first coil carriers (13,23) fixed on opposite sides of the lens holder, a first coil (14,24) being used for moving an objective lens in a first direction, and a second pair of second coil carriers (15,25) adjacent to said first pair and fixed on opposite sides of the lens holder, a second coil (16,26) being used for moving the objective lens in a second direction, wherein said actuator further comprises tension wires (20,21), a tension wire being fixed between each coil carrier of a pair, **characterized in that** the tension wires are placed inside the lens holder and both of the wire ends are fixed to a coil carrier being on opposite sides of the lens holder such that they are adapted to rigidify the objective lens actuator.

2. An objective lens actuator as claimed in claim 1, wherein the tension wires (20,21) are substantially perpendicular to the coil carriers (14-24,16-26) and are fixed on a median axis of said coil carriers.

3. An objective lens actuator as claimed in claim 1, wherein the tension wires (20,21) are made of beryllium-copper.

4. A recording and/or reproducing system comprising an objective lens actuator as claimed in claim 1, for recording on and/or reproducing from a record carrier.

## Patentansprüche

1. Objektivlinsen-Stellglied mit einem Linsenhalter (10), einem ersten Paar von ersten Spulenträgern (13,23), die an einander gegenüber liegenden Seiten des Linsenhalters befestigt sind, wobei eine erste Spule (14,24) zum Bewegen einer Objektivlinse in einer ersten Richtung verwendet wird, und einem zweiten, dem genannten ersten Paar benachbarten Paar von zweiten Spulenträgern (15,25), die an einander gegenüber liegenden Seiten des Linsenhalters befestigt sind, wobei eine zweite Spule (16,26) zum Bewegen der Objektivlinse in einer zweiten Richtung verwendet wird, wobei das genannte Stellglied weiterhin Spanndrähte (20,21) umfasst, wobei ein Spanndraht zwischen jedem Spulenträgern eines Paares befestigt ist, **dadurch gekennzeichnet, dass** die Spanndrähte innerhalb des Linsenhalters platziert sind und beide Drahtenden an einem an einander gegenüber liegenden Seiten des Linsenhalters liegenden Spulenträger befestigt sind, sodass sie ausgebildet sind, das Objektivlinsen-Stellglied zu versteifen.

2. Objektivlinsen-Stellglied nach Anspruch 1, bei dem die Spanndrähte (20, 21) nahezu senkrecht zu den Spulenträgern (14-24, 16-26) stehen und auf einer Mittelachse der genannten Spulenträger befestigt sind.

3. Objektivlinsen-Stellglied nach Anspruch 1, bei dem die Spanndrähte (20, 21) aus Beryllium-Kupfer hergestellt sind.

4. Aufzeichnungs- und/oder Wiedergabesystem mit einem Objektivlinsen-Stellglied nach Anspruch 1, zum Aufzeichnen auf und/oder Wiedergeben aus einem Aufzeichnungsträger.

## Revendications

1. Actionneur de lentille d'objectif comprenant un porte-objectif (10), une première paire de premiers supports de bobine (13, 23) qui se situe des côtés opposés du porte-objectif, une première bobine (14, 24) étant utilisée pour déplacer une lentille d'objectif dans une première direction, et une deuxième paire de deuxièmes supports de bobine (15, 25) qui est adjacente à ladite première paire et qui est fixée des côtés opposés du porte-objectif, une deuxième bobine (16, 26) étant utilisée pour déplacer la lentille d'objectif dans une deuxième direction dans laquelle ledit actionneur comprend encore des fils de tension (20, 21), un fil de tension étant fixé entre chaque support de bobine d'une paire, **caractérisé en ce que** les fils de tension sont placés à l'intérieur du porte-objectif et **en ce que** les deux extrémités de fil sont fixées à un support de bobine qui se situe des côtés opposés du porte-objectif de telle façon qu'elles soient adaptées de manière à rigidifier l'actionneur de lentille d'objectif.

2. Actionneur de lentille d'objectif selon la revendication 1, dans lequel les fils de tension (20, 21) sont sensiblement perpendiculaires aux supports de bobine (14-24, 16-26) et sont fixés sur un axe médian desdits supports de bobine.

3. Actionneur de lentille d'objectif selon la revendication 1, dans lequel les fils de tension (20, 21) sont fabriqués à partir de béryllium et de cuivre.

4. Système d'enregistrement et/ou de reproduction comprenant un actionneur de lentille d'objectif selon la revendication 1, pour l'enregistrement sur et/ou pour la reproduction à partir d'un support d'enregistrement.
